(19) Europäisches Patentamt
European Patent Office
Office européen des brevets

(11) **EP 2 668 241 B1**

## (12) EUROPÄISCHE PATENTSCHRIFT

(45) Veröffentlichungstag und Bekanntmachung des Hinweises auf die Patenterteilung:
**19.06.2019   Patentblatt 2019/25**

(51) Int Cl.:
*C09J 7/29* [(2018.01)]     *B32B 7/12* [(2006.01)]
*B32B 27/12* [(2006.01)]     *B32B 27/32* [(2006.01)]
*B32B 27/36* [(2006.01)]     *B32B 5/02* [(2006.01)]

(21) Anmeldenummer: **12700831.6**

(22) Anmeldetag: **20.01.2012**

(86) Internationale Anmeldenummer:
**PCT/EP2012/050837**

(87) Internationale Veröffentlichungsnummer:
**WO 2012/101045 (02.08.2012 Gazette 2012/31)**

(54) **KLEBEBAND, DAS INSBESONDERE ZUR TRANSPORTSICHERUNG EINGESETZT WERDEN KANN**

ADHESIVE TAPE WHICH CAN BE USED, IN PARTICULAR, FOR SECURING DURING TRANSPORTATION

BANDE ADHÉSIVE POUVANT NOTAMMENT ÊTRE EMPLOYÉE COMME SÉCURITÉ DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2011   DE 102011009510**

(43) Veröffentlichungstag der Anmeldung:
**04.12.2013   Patentblatt 2013/49**

(73) Patentinhaber: **tesa SE**
**22848 Norderstedt (DE)**

(72) Erfinder:
• **KEREP, Patrick**
**22767 Hamburg (DE)**

• **ERTAS, Irfan**
**22527 Hamburg (DE)**

(56) Entgegenhaltungen:
EP-A1- 1 911 823     WO-A1-2009/133175
WO-A2-01/70896     WO-A2-01/83632

• **"5004 (ISO 29864 - EN 14410) - International Harmonized Test Method - Afera Test Method. Test Method for Breaking Strength and Elongation of Pressure Sensitive Tape", 1 October 2003 (2003-10-01), AFERA TEST METHODS MANUAL, 2008 EDITION,, PAGE(S) 19 - 26, XP001525930, [retrieved on 2008-02-01]**

**Beschreibung**

Die Erfindung betrifft ein Klebeband, das insbesondere zur Transportsicherung eingesetzt werden kann.

Für Transportsicherungsbänder werden hauptsächlich drei Trägermaterialien eingesetzt:

- MOPP
- (Gerecktes) PET
- Laminate aus dünnen BOPP/PET Trägern mit Glasfasern und PET-Fasern Überwiegend werden orientierte Trägermaterialien wie zum Beispiel MOPP verwendet.

Nicht unerwähnt bleiben soll an dieser Stelle auch ein Nachteil der erhöhten Klebkräfte von Transportsicherungsklebebändern. Dieser besteht darin, dass mit der Zunahme der Klebkräfte auch das Risiko steigt, den Untergrund beim Abziehen zu beschädigen, zum Beispiel durch Abheben von Lackbeschichtungen.

Es besteht insofern der Bedarf an ein Transportsicherungsklebeband, welches universell auf allen für die Anwendung relevanten Untergründen angewendet werden kann wie zum Beispiel die Kunststoffe ABS, PS, PP, PE, PC, POM, wie verschiedene Metalle, wie lösemittel-, wasserbasierte und als Pulver aufgetragene Lacke.

Obwohl derartige Klebebänder in sehr verschiedenen Anwendungen genutzt werden, haben sie einige wesentliche Eigenschaften, damit sie die besonderen an sie gestellten Anforderungen erfüllen. Dies sind - ohne dass diese Aufstellung den Anspruch auf Vollständigkeit erhebt - eine sehr hohe Zugfestigkeit (Höchstzugkraft), eine sehr gute Dehnresistenz entsprechend einem hohen Modul bei geringen Dehnungen und eine geringe Reißdehnung, eine ausreichende aber nicht zu hohe Klebkraft, eine dosierte Klebkraft auf der eigenen Rückseite, die rückstandsfreie Wiederablösbarkeit nach den Beanspruchungen der eigentlichen Anwendung, die Robustheit des Trägers gegenüber mechanischer Belastung und für einige Anwendungen auch noch die Beständigkeit des Klebebandes gegenüber UV-Bestrahlung und gegen viele Chemikalien.

Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Für Transportsicherungsklebebänder werden aufgrund der besonderen mechanischen Ansprüche in der Regel orientierte Folienträger eingesetzt. Durch Orientierung gleichbedeutend mit einer Verstreckung der primär im Herstellprozess gebildeten Primärfolie in einer oder mehrerer Vorzugsrichtungen lassen sich die mechanischen Eigenschaften gezielt beeinflussen. So genannte biaxial orientierte Folien können entweder sequentiell verstreckt werden, wobei die Primärfolie nach Bildung durch Extrusion mit einer Breitschlitzdüse zunächst in Maschinenrichtung verstreckt wird, indem sie über eine Abfolge von Walzen geführt wird, wobei die Transportgeschwindigkeit der Folie größer ist als die Geschwindigkeit beim Austritt aus der Extrusionsdüse. Anschließend wird die Folie in einem Streckwerk in Querrichtung verstreckt. Das Verstrecken der Folie in zwei Richtungen kann auch in einem Schritt ausgeführt werden (vergleiche zum Beispiel US 4,675,582 A und US 5,072,493 A).

Ebenfalls finden sich im Markt für Klebebänder solche, deren BOPP-Träger im Blasfolienverfahren verstreckt worden sind.

In einer bevorzugten Ausführungsform werden Träger für Transportsicherungsklebebänder ausschließlich in Maschinenrichtung verstreckt. Mit diesem Verfahren lassen sich Polypropylenfolien mit den höchsten Zugfestigkeiten und Moduln erzielen. Üblicherweise beträgt das verwendete Streckverhältnis, das heißt der Quotient aus Länge eines Primärfolienkompartiments zu dem entsprechenden des Endprodukts, zwischen 1:5 bis 1:10. Besonders bevorzugt werden Streckverhältnisse zwischen 1:7 und 1:8,5. Die sehr hohe Dehnungsresistenz von ausschließlich monoaxial orientierten Polypropylenfolien ist eine der wesentlichsten Eigenschaften für den Einsatz.

Das Wirkprinzip der Orientierung liegt in der Ausrichtung der Polymermolekülketten und der daraus gebildeten Kristallstrukturen sowie in der Ausrichtung der amorphen Bereiche in bestimmte Vorzugsrichtungen und der damit verbundenen Festigkeitszunahme. Prinzipbedingt wird dabei aber auch die Festigkeit in diejenige Richtung, in welche nicht orientiert wird, verringert. Entsprechend findet sich im Falle der BOPP- und BOPET-Folien und ganz besonders im Falle der MOPP-Folien eine deutlich geringere Festigkeit der Folien in der z-Richtung (in Richtung der geringsten Ausdehnung der Folie).

Zusammenfassend werden die folgenden Eigenschaften an ein Transportsicherungsband gestellt:

a) Gute Verklebung:
Das Klebeband muss auf verschiedenen Untergründen ausreichend haften und ausreichend Kohäsion haben, um bewegliche Teile während des Transports zu sichern.
b) Hohe Zugfestigkeit:
Das Klebeband muss eine ausreichende Festigkeit haben, um besonders schwerere bewegliche Teile festzuhalten, ohne dabei zu reißen.

c) Geringe Dehnbarkeit:

Das Klebeband muss eine geringe Dehnung haben, um beim Sichern von schwereren Gegenständen nicht nachzugeben.

d) Rückstandsfreie Entfernbarkeit:

Das Klebeband muss vom Untergrund rückstandsfrei entfernbar sein.

e) Schlagzähigkeit in Querrichtung:

Das Klebeband muss, abhängig von der Art der Applikation, auch in Querrichtung Belastung aufnehmen können, die durch Schockeinwirkung auf das Transportgut entstehen kann.

f) Stabilität bei Kantenverletzung:

Das Klebeband muss auch bei Verletzung der Kante seine Funktionsfähigkeit erhalten.

Nachteil von herkömmlichem MOPP und gerecktem PET ist unter anderem, dass sie eine hohe Dehnbarkeit von größer 25 bis 30 % aufweisen und somit unter Belastung stark nachgeben. Durch diese Dehnung kann sich das mit einem derartigen Klebeband gesicherte Transportgut lösen und ist nicht mehr ausreichend gesichert.

MOPP und gerecktes PET haben zudem den Nachteil, dass sie bei Verletzung der Kante sehr leicht durchreißen. Da bei üblichen Anwendungen auch Gegenstände mit scharfen Kanten gesichert werden müssen, kann das Klebeband hierbei leicht verletzt werden und dabei reißen.

BOPP und MOPP haben zusätzlich den Nachteil, dass sie bei Schockeinwirkung in Querrichtung leicht in Maschinenrichtung auseinanderplatzen, das heißt, sie haben eine geringe Schlagzugzähigkeit. Häufig werden die Klebebänder aber in Längsrichtung auf einen Spalt (zum Beispiel Kühlschranktür) aufgeklebt. Während des Transports können dabei große Kräfte in Querrichtung auf das Klebeband einwirken, wodurch sie in Längsrichtung auseinander reißen. Die Funktion als Transportsicherung ist damit nicht mehr gewährleistet.

Zur Verbesserung werden Träger aus gerecktem PET oder BOPP mit Filamenten aus Glasfasern verstärkt. Die Filamente geben dem Klebeband eine hohe Zugfestigkeit und haben gleichzeitig eine geringe Dehnbarkeit. Beim Verletzen der Kante reißt zwar der Träger aber nicht die Filamente.

Glasfilamente haben den generellen Nachteil, dass sie eine hohe Brüchigkeit aufweisen. Das heißt, die Klebebänder verlieren ihre Zugfestigkeit teilweise oder sogar ganz, wenn sie über scharfe Kanten laufen, da die Glasfilamente brechen. Herkömmliche PET-Filamente sind nicht brüchig, bieten eine gute Zugfestigkeit, haben aber eine Dehnbarkeit von größer 25 % und sind daher auch nur bedingt geeignet.

Alle unidirektionalen Verstärkungen geben dem Klebeband keine Zugfestigkeit in Querrichtung, das heißt, der oben beschriebene Nachteil bei der beispielhaften Applikation auf einen (Tür-)Spalt bleibt erhalten. Zugfestigkeit und Schlagzugzähigkeit in Querrichtung werden nicht verbessert.

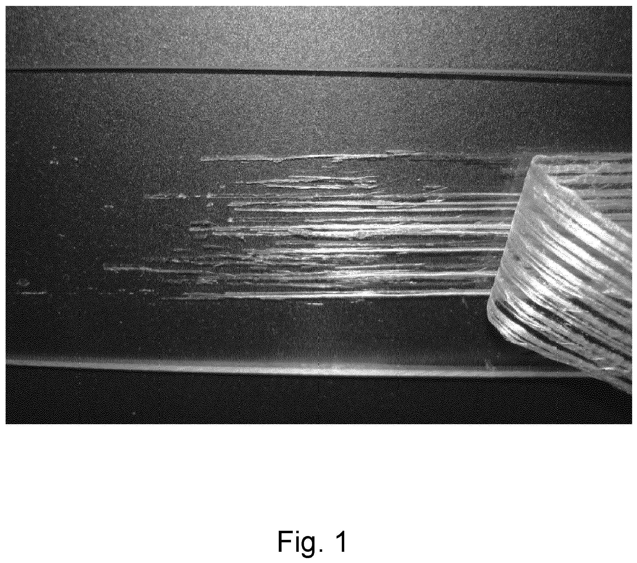

Das Klebeband sollte zudem rückstandsfrei ablösbar sein, da die gesicherten Güter hinterher verkauft werden und einem ästhetischem Anspruch genügen müssen. Unidirektional verstärkte Bänder hinterlassen beim Ablöseprozess häufig Rückstände, wie in der Figur 1 gezeigt ist.

In der EP 1 911 823 A1, der WO01/70896 A2 und der WO 2009/133175 A1 werden Klebebänder mit einem üblichen Gewebeträger beschrieben, aber nicht ein Ketten-Strickgewebe mit Schussfäden.

Aus der WO 01/83632 A2 sind Klebebänder bekannt, die handeinreißbar sein sollen. Diese Klebebänder sind in ihrer Festigkeit in Querrichtung reduziert.

Aufgabe der Erfindung ist es, gegenüber dem Stand der Technik eine merkliche Verbesserung zu erzielen und ein Klebeband bereitzustellen, welches eine hohe Festigkeit und geringe Dehnfähigkeit aufweist und das insbesondere auch vom Untergrund rückstandsfrei wiederablösbar ist.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren ist die Verwendung des erfindungsgemäßen Bands vom Erfindungsgedanken umfasst.

Demgemäß betrifft die Erfindung ein Klebeband mit einem Träger, auf den zumindest einseitig eine Klebemasse aufgebracht ist, wobei

- der Träger aus einer Folie besteht, auf der unterseitig ein Filamentgelege oder -gewebe vorhanden ist, das entweder direkt auf der Folie aufgebracht oder mittels einer Laminierklebemasse mit der Folie verbunden ist wobei das Filamentgelege oder -gewebe ein Ketten-Strickgewebe mit Schussfäden (weft inserted warp knit) ist,
- die Klebemasse auf die Seite des Trägers aufgebracht wird, auf der sich das Filamentgelege oder-gewebe befindet,
- das Filamentgelege oder -gewebe eine Zugfestigkeit in Maschinenrichtung von mindestens 50 N/cm sowie eine Reißdehnung von unter 20 %, bevorzugt unter 15 %, besonders bevorzugt unter 10 % aufweist.

Die Folie besteht

- aus mono- oder biaxial orientiertem Polypropylen

- aus mono- oder biaxial orientiertem Polyethylen oder
- aus mono- oder biaxial orientiertem Polyester.

Die Folien selbst können wiederum aus mehreren einzelnen Lagen besteht, beispielsweise aus zu Folie coextrudierten Lagen.

Bevorzugt werden Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-BlockCopolymere).

Erfindungsgemäß hervorragend als Folien einsetzen lassen sich monoaxial und biaxial gereckte Folien. Monoaxial gerecktes Polypropylen beispielsweise zeichnet sich durch seine sehr hohe Reißfestigkeit und geringe Dehnung in Längsrichtung aus.

Besonders bevorzugt sind Folien auf Basis Polyester.

Die Folie weist vorzugsweise eine Dicke von 12 $\mu$m bis 100 $\mu$m, weiter vorzugsweise 28 bis 50 $\mu$m, insbesondere 35 $\mu$m auf.

Die Folie kann farbig und/oder transparent sein.

Das Filamentgelege oder -gewebe ist ein Ketten-Strickgewebe mit Schussfäden (weft inserted warp knit). Ein solches ist zum Beispiel in der EP 1 818 437 A1 beschrieben.

Das Filamentgelege oder -gewebe weist eine Zugfestigkeit in Maschinenrichtung von vorzugsweise mindestens 100 N/cm, weiter vorzugsweise 200 N/cm, besonders vorzugsweise 500 N/cm auf.

Vorzugsweise weisen die zur Bildung des Geleges oder des Gewebes verwendeten Garne eine Stärke von 80 bis 2200 dtex, vorzugsweise 280 bis 1100 dtex auf.

Im Sinne dieser Erfindung wird unter einem Filament ein Bündel paralleler, gerader Einzelfasern/Einzelfilament verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen.

Das Gelege/Gewebe kann nachträglich gefärbt sein oder aus spinngefärbten Garnen bestehen.

Weiter bevorzugt bestehen die Filamente aus Polyester, Polypropylen, Polyethylen oder Polyamid, bevorzugt Polyester (Diolen).

Gemäß einer weiteren vorteilhaften Ausführungsform der Erfindung beträgt die Filamentzahl in Kettrichtung mindestens 6/cm, vorzugsweise 10 bis 25/cm und/oder die Filamentzahl im Schuss mindestens 3 bis 10/cm, vorzugsweise 6/cm.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar. Letztere sind in DE 198 07 752 A1 sowie in DE 100 11 788 A1 näher beschrieben.

Die eventuell vorhandene Laminierklebemasse kann aus den gleichen Klebmassensystemen gewählt werden.

Das Auftragsgewicht bewegt vorzugsweise sich im Bereich zwischen 15 bis 200 g/m$^2$, weiter vorzugsweise 30 bis 120 g/m$^2$, besonders vorzugsweise 80 g/m$^2$ (entspricht ungefähr einer Dicke von 15 bis 200 $\mu$m, weiter vorzugsweise 30 bis 120 $\mu$m, besonders vorzugsweise 80 $\mu$m).

Vorzugsweise ist die Klebemasse eine Haftklebemasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Als Haftklebemassen finden solche auf Basis von Blockcopolymeren enthaltenden Polymerblöcke Anwendung. Gebildet werden diese bevorzugt von Vinylaromaten (A-Blöcke) wie zum Beispiel Styrol und solchen durch Polymerisation von 1,3-Dienen (B-Blöcke) wie zum Beispiel Butadien und Isopren oder einem Copolymer aus beiden. Es können auch Mischungen unterschiedlicher Blockcopolymere zum Einsatz kommen. Bevorzugt werden Produkte eingesetzt, die zum Teil oder vollständig hydriert sind.

Die Blockcopolymere können lineare A-B-A-Struktur aufweisen. Einsetzbar sind ebenfalls Blockcopolymere von radialer Gestalt sowie sternförmige und lineare Multiblockcopolymere.

Anstelle der Polystyrolblöcke können auch Polymerblöcke auf Basis anderer aromatenhaltiger Homo- und Copolymere (bevorzugt C$_8$- bis C$_{12}$-Aromaten) mit Glasübergangstemperaturen von > ca. 75 °C genutzt werden wie zum Beispiel $\alpha$-methylstyrolhaltige Aromatenblöcke. Gleichfalls sind Polymerblöcke auf Basis von (Meth)acrylathomo- und (Meth)acrylatcopolymeren mit Glasübergangstemperaturen von > +75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Die Angaben zur Glasübergangstemperatur für nicht anorganische und nicht überwiegend anorganische Materialien, insbesondere für organische und polymere Materialien, beziehen sich auf den Glasübergangstemperatur-Wert $T_g$ nach DIN 53765:1994-03 (vgl. Abschnitt 2.2.1), sofern im Einzelfall nichts anderes angegeben ist.

Anstelle von Styrol-Butadien-Blockcopolymeren und Styrol-Isopren-Blockcopolymeren und/oder deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte genutzt werden, welche weitere polydienhaltige Elastomerblöcke nutzen wie zum Beispiel Copolymere mehrerer unterschiedlicher 1,3-Diene. Erfindungsgemäß nutzbar sind des weiteren funktionalisierte Blockcopolymere wie zum Beispiel maleinsäureanhydridmodifizierte oder silanmodifizierte Styrolblockcopolymere.

Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze.
Geeignete Klebharze sind unter anderem vorzugsweise partiell oder vollständig hydrierte Harze auf Basis von Kolophonium oder Kolophoniumderivaten. Es können auch zumindest zum Teil hydrierte Kohlenwasserstoffharze zum Beispiel hydrierte Kohlenwasserstoffharze erhalten durch teilweise oder vollständige Hydrierung von aromatenhaltigen Kohlenwasserstoffharzen (zum Beispiel Arkon P und Arkon M Serien der Firma Arakawa oder Regalite-Serie von Eastman), Kohlenwasserstoffharze auf Basis von hydrierten Dicyclopentadien-Polymeren (zum Beispiel Escorez 5300er-Serie von Exxon), Kohlenwasserstoffharze auf Basis von hydrierten $C_5/C_9$-Harzen (Escorez 5600er-Serie von Exxon) oder Kohlenwasserstoffharze auf Basis von hydrierten $C_5$-Harzen (Eastotac der Firma Eastman) beziehungsweise deren Gemische eingesetzt werden. Auch hydrierte Polyterpenharze auf Basis von Polyterpenen sind verwendbar. Vorgenannte Klebharze können sowohl allein als auch im Gemisch eingesetzt werden.

Als weitere Additive können typischerweise Lichtschutzmittel wie zum Beispiel UV-Absorber, sterisch gehinderte Amine, Antiozonantien, Metalldesaktivatoren, Verarbeitungshilfsmittel, endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Die Klebemasse kann in Längsrichtung des Klebebands in Form eines Streifens aufgebracht sein, der eine geringere Breite aufweist als der Träger des Klebebands.
Der beschichtete Streifen kann eine Breite von 10 bis 80 % der Breite des Trägermaterials haben. Besonders vorzugsweise erfolgt in einem solchen Fall der Einsatz von Streifen mit einer Beschichtung von 20 bis 50 % der Breite des Trägermaterials.
Je nach Verwendungsfall können auch mehrere parallele Streifen des Klebers auf dem Trägermaterial beschichtet sein. Die Lage des Streifens auf dem Träger ist frei wählbar, wobei eine Anordnung direkt an einer der Kanten des Trägers bevorzugt wird.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.
Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.

Auf der oberen Sete des Trägers beziehungsweise der Folie kann ein Trennmittel, auch Release genannt, aufgebracht sein.
Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von $C_{14}$ - $C_{28}$ Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew.-%, besonders bevorzugt 13 bis 18 Gew.-% des trennwirksamen Bestandteils.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Auf der Rückseite des Klebebandes kann ein Rückseitenlack aufgetragen sein, um die Abrolleigenschaften des zur archimedischen Spirale gewickelten Klebebandes günstig zu beeinflussen.

Der Einsatz von Verstärkungen bestehend aus bidirektionalem Gelegen/Geweben aus PET-Garnen mit niedriger Dehnbarkeit hat sich als vorteilhaft erwiesen. Besonders Ketten-Strickgewebe mit Schussfäden sind geeignet, da durch die fehlende Wellenstruktur des Kettfadens bei Gelegen keine zusätzliche Dehnbarkeit in das Material eingetragen wird.

Überraschenderweise zeigen die bidirektional verstärkten Klebebänder bei gleicher Klebmasse und Masseauftrag zusätzlich eine deutlich verbesserte rückstandsfreie Ablösbarkeit vom Untergrund. Dadurch wird das Ausreißen von Fasern während des Ablöseprozesses deutlich reduziert beziehungsweise sogar ganz unterdrückt. Zudem erhält das Klebeband eine hohe Festigkeit und Schlagzugzähigkeit in Querrichtung, gleichzeitig eine deutliche geringere Brüchigkeit gegenüber Glas.

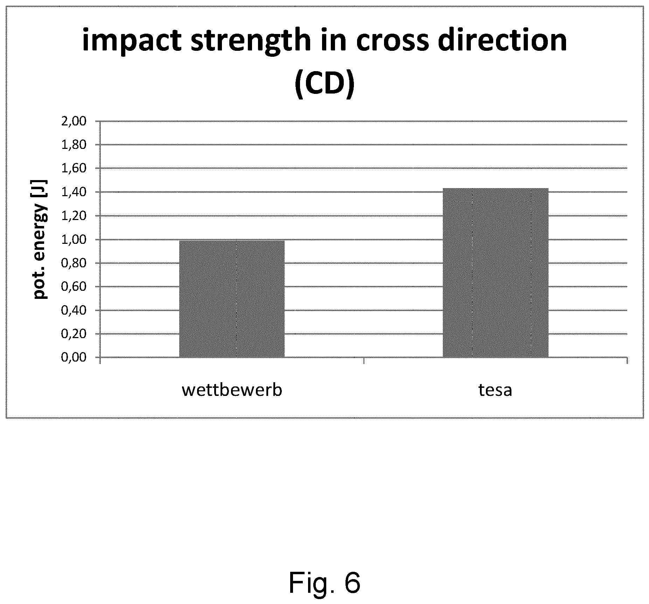

In der Figur 6 ist ein Vergleich der Festigkeit in Querrichtung eines erfindungsgemäßen Klebebands (rechts, mit "tesa" bezeichnet) und eines bekannten Klebebands (links, mit "wettbewerb bezeichnet) gezeigt, wobei letzteres nur eine unidirektionale Verstärkung in Längsrichtung in Form von reinen Filamenten aufweist.

Die Klebebänder weisen den in der Tabelle 1 angegeben Aufbau auf:

Tabelle 1

| Träger | 50 μm PET-Folie | 36 μm PET-Folie |
|---|---|---|
| Verstärkung | unidirektionale PET-Fasern | bidirektionale PET-Fasern |
| Längsrichtung | 335 dtex | 1100 dtex |
| | 11 Filamente/cm | 7,3 Filamente/cm |
| Querrichtung | ./. | 167 |
| | ./. | 3,6 Filamente/cm |
| Klebemasse | NR | SR |
| | | |
| pot. Energie [J] | 0,988 | 1,429 |
| "NR" steht für eine Naturkautschuk basierende Klebemasse "SR" steht für eine Synthesekautschuk basierende Klebemasse | | |

Die potentielle Energie kann über die Fallhöhe (H) und das Gewicht (m) berechnet werden:

$$W = m * g * H \quad \text{in } [J]$$

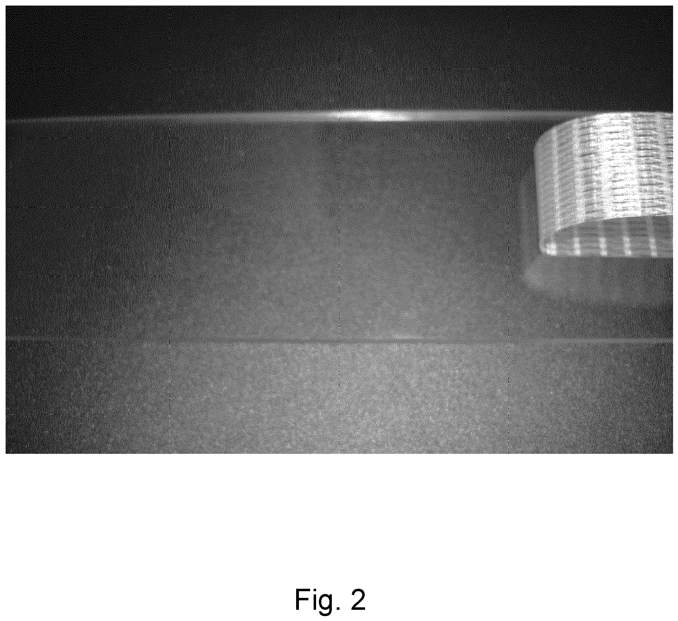

In der Figur 2 ist gezeigt, dass sich das erfindungsgemäße Klebeband rückstandsfrei wiederablösen lässt.

**Prüfmethoden**

Die Messungen werden - sofern die angegebene Norm nicht etwas vorschreibt - bei einem Prüfklima von 23 ± 1 °C und 50 ± 5 % rel. Luftfeuchte durchgeführt.

Die Höchstzugkraft (Reißkraft) wird nach AFERA 5004, die Reißdehnung nach AFERA 5004 und die Klebkraft nach AFERA 4001 gemessen.

**Rückstandsfreie Entfernbarkeit von Kunststoffoberflächen**

Zur Prüfung der rückstandsfreien Entfernbarkeit des Klebebands von Kunststoffoberflächen werden 20 mm breite Klebebandstreifen auf Kunststoffplatten (zum Beispiel Polycarbonat) verklebt und mit einem Gewicht (2 kg, 3 m/min.) aufgerollt.

Die Muster werden im verklebten Zustand vor der Prüfung drei Tage bei 40 °C gelagert und anschließend 1 Tag bei Raumtemperatur konditioniert.

Bei der Prüfung der Wiederaufnehmbarkeit wird die erste Hälfte des Klebebandstreifens in einem Winkel von 90° vom Substrat abgezogen und der Rückstand ermittelt.

Die zweite Hälfte des Streifens wird dann in einem Winkel von 180° abgezogen und der Rückstand ermittelt. Die Abzugsgeschwindigkeit liegt jeweils bei 20 m/min.

**Messung der Festigkeit in Querrichtung**

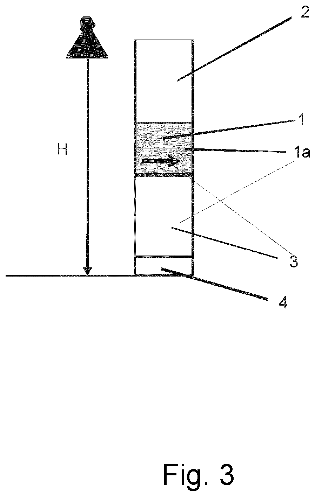

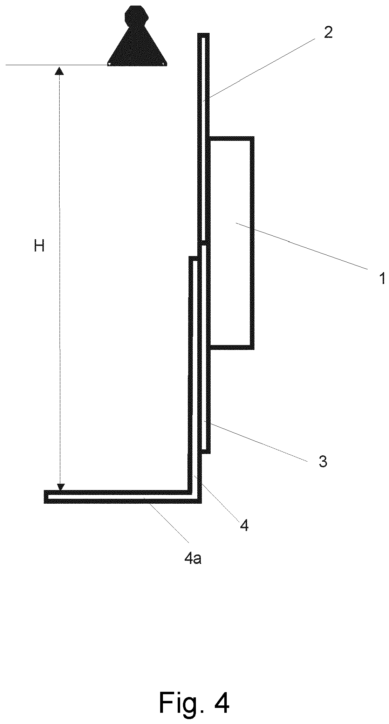

Die Messung der Festigkeit in Querrichtung erfolgt gemäß einem Aufbau, wie ihn die Figuren 3 und 4 zeigen. In der Figur 4 ist der Aufbau gemäß Figur 3 von der Seite gezeigt.

Zwei Kopf an Kopf liegende Prüfplattenplatten 2, 3 aus Kunststoff werden an der Stoßstelle mit einem 50 mm breiten Klebeband 1 überklebt, so dass der Stoß 1a mittig liegt. Der Stoß verläuft in Maschinenrichtung des Klebebands (durch den Pfeil angedeutet). Die Breite der Platten (entspricht der Länge des Klebebandstreifens) beträgt 50 mm.

Dieses präparierte Muster wird auf eine (nicht detailliert dargestellte) Vorrichtung eingespannt. In der Vorrichtung ist vorgesehen, dass die obere Kunststoffplatte 2 fest auf gebracht ist und die untere 3 auf einen nach unten beweglichen Schlitten 4 montiert wird. Der Schlitten 4 hat im hinteren Teil ein 90° Winkel 4a aus Stahl, wo ein Gewicht auffallen kann.

Das Gewicht beträgt 400 g und wird aus der vorgegebenen Fallhöhe H auf den 90° Winkel 4a des Schlittens 4 fallengefallen.

Die maximale Fallhöhe H auf 500 mm limitiert.

Das Gewicht wird auf den Winkel 4a aus einer definierten Höhe H fallengelassen.

Die beobachtete Höhe H bei dem das Klebeband in Fallrichtung des Gewichts auseinanderplatzt, korreliert mit der Festigkeit (Schlagzähigkeit) in Querrichtung des Tapes.

Im Folgenden soll das Klebeband anhand einer Figur näher erläutert werden, ohne damit eine wie auch immer geartete Einschränkung hervorrufen zu wollen.

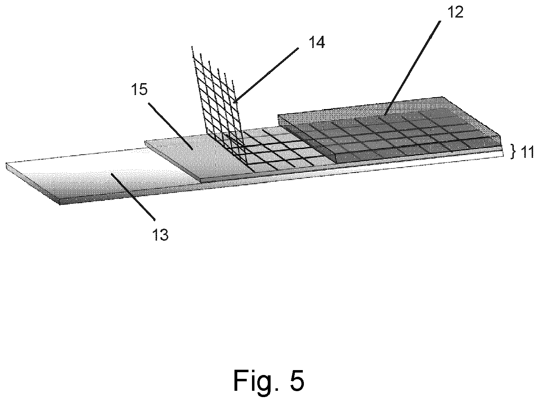

In der Figur 5 ist im seitlichen Schnitt das Klebeband gezeigt, das aus einem Träger 11 besteht, auf den einseitig eine Schicht einer selbstklebenden Beschichtung 12 aufgebracht ist.

Auf eine 35 μm dicke PET-Folie 13 ist ein WIWK (warp inserted warp knit)-Gewebe aus PET (Diolen) 14 auflaminiert, und zwar unter Verwendung eines Laminierklebstoffs 15. Auf das WIWK-Gewebe 14 ist eine Klebemasse 12 auf Basis SIS mit 80 g/m$^2$ und einer Klebkraft von 7,5 N/cm beschichtet.

**Patentansprüche**

1. Klebeband mit einem Träger, auf den zumindest einseitig eine Klebemasse aufgebracht ist, wobei
   der Träger aus einer Folie besteht, auf der unterseitig ein Filamentgelege oder -gewebe vorhanden ist, das entweder direkt auf der Folie aufgebracht oder mittels einer Laminierklebemasse mit der Folie verbunden ist,
   wobei das Filamentgelege oder -gewebe ein Ketten-Strickgewebe mit Schussfäden (weft inserted warp knit) ist,
   die Klebemasse auf die Seite des Trägers aufgebracht wird, auf der sich das Filamentgelege oder-gewebe befindet,
   das Filamentgelege oder-gewebe eine Zugfestigkeit in Maschinenrichtung gemessen nach der AFERA 5004 von mindestens 50 N/cm sowie eine Reißdehnung gemessen nach der AFERA 5004 von unter 20 % aufweist,
   **dadurch gekennzeichnet, dass**
   die Folie besteht

   • aus mono- oder biaxial orientiertem Polypropylen
   • aus mono- oder biaxial orientiertem Polyethylen oder

• aus mono- oder biaxial orientiertem Polyester.

**2.** Klebeband nach Anspruch 1,
**dadurch gekennzeichnet, dass**
die Folie eine Dicke von 12 $\mu$m bis 100 $\mu$m, vorzugsweise 28 $\mu$m bis 50 $\mu$m insbesondere 35 $\mu$m aufweist.

**3.** Klebeband nach zumindest einem der vorherigem Ansprüche
**dadurch gekennzeichnet, dass**
das Filamentgelege oder-gewebe eine Zugfestigkeit in Maschinenrichtung gemessen nach der AFERA 5004 von mindestens 100 N/cm, vorzugsweise 200 N/cm aufweist.

**4.** Verwendung des Klebebandes nach zumindest einem der vorherigen Ansprüche als Transportsicherungsband von Gütern, die bewegliche Teile aufweisen wie zum Beispiel Türen an Weißgeräten.

## Claims

**1.** Adhesive tape having a carrier bearing on at least one side an applied adhesive, where
the carrier consists of a film having on its underside a laid or woven filament fabric which has either been applied directly to the film or been joined to the film by means of a laminating adhesive,
where the laid or woven filament fabric is a warp knit with weft threads (weft inserted warp knit), the adhesive is applied to the side of the carrier on which the laid or woven filament fabric is located, and
the laid or woven filament fabric has a tensile strength in machine direction measured according to AFERA 5004 of at least 50 N/cm and also an elongation at break measured according to AFERA 5004 of below 20%,
**characterized in that**
the film consists

• of mono- or biaxially oriented polypropylene,
• of mono- or biaxially oriented polyethylene, or
• of mono- or biaxially oriented polyester.

**2.** Adhesive tape according to Claim 1,
**characterized in that**
the film has a thickness of 12 $\mu$m to 100 $\mu$m, preferably 28 $\mu$m to 50 $\mu$m, more particularly 35 $\mu$m.

**3.** Adhesive tape according to at least one of the preceding claims,
**characterized in that**
the laid or woven filament fabric has a tensile strength in machine direction measured according to AFERA 5004 of at least 100 N/cm, preferably 200 N/cm.

**4.** Use of the adhesive tape according to at least one of the preceding claims as a transit securement tape for goods having movable parts, such as doors on white appliances.

## Revendications

**1.** Ruban adhésif présentant un support, sur lequel est appliquée, du moins d'un côté, une masse adhésive, le support étant constitué d'une feuille, sur la face inférieure de laquelle se trouve une nappe ou un tissu de filaments, qui est soit appliqué(e) directement sur la feuille, soit lié(e) à la feuille au moyen d'une masse adhésive stratifiée,
la nappe ou le tissu de filaments étant un tricot à mailles jetées avec des fils de trame (weft inserted warp knit),
la masse adhésive étant appliquée sur le côté du support sur lequel se trouve la nappe ou le tissu de filaments, la nappe ou le tissu de filaments présentant une résistance à la traction dans la direction machine, mesurée selon la norme AFERA 5004, d'au moins 50 N/cm ainsi qu'un allongement à la rupture, mesuré selon la norme AFERA 5004, inférieur à 20%, **caractérisé en ce que** la feuille est constituée par

- du polypropylène orienté de manière monoaxiale ou biaxiale
- du polyéthylène orienté de manière monoaxiale ou biaxiale ou
- du polyester orienté de manière monoaxiale ou biaxiale.

2. Ruban adhésif selon la revendication 1, **caractérisé en ce que** la feuille présente une épaisseur de 12 $\mu$m à 100 $\mu$m, de préférence de 28 $\mu$m à 50 $\mu$m, en particulier de 35 $\mu$m.

3. Ruban adhésif selon au moins l'une quelconque des revendications précédentes, **caractérisé en ce que** la nappe ou le tissu de filaments présente une résistance à la traction dans la direction machine, mesurée selon la norme AFERA 5004, d'au moins 100 N/cm, de préférence de 200 N/cm.

4. Utilisation du ruban adhésif selon au moins l'une quelconque des revendications précédentes comme ruban de sécurité de transport de marchandises, qui présentent des pièces mobiles, comme par exemple les portes sur des électroménagers.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4675582 A
- US 5072493 A
- EP 1911823 A1
- WO 0170896 A2
- WO 2009133175 A1
- WO 0183632 A2

- EP 1818437 A1
- DE 19807752 A1
- DE 10011788 A1
- DE 2845541 A
- EP 1336683 B1